# EUROPEAN PATENT SPECIFICATION

(11) **EP 2 375 824 B1**
(45) Date of publication and mention of the grant of the patent: **04.01.2017**
(21) Application number: 11170242.9
(22) Date of filing: 01.05.2008
(51) Int. Cl.: H04W 48/12, H04W 84/18

(54) **Wi-fi protected setup in adhoc network**
Wi-Fi-geschützte Errichtung eines Adhoc-Netzwerks
Configuration wi-fi protégée dans un réseau adhoc

(30) Priority: 10.05.2007 JP 2007125243
(43) Date of publication of application: 12.10.2011
(62) Divisional of application: 08752566.3
(73) Proprietor: CANON KABUSHIKI KAISHA, Ohta-ku Tokyo 146-8501 (JP)
(72) Inventor: Nakahara, Masanori, Ohta-ku, Tokyo (JP)
(74) Representative: Garner, Jonathan Charles Stapleton

(56) References cited:
- EP-A- 1 718 012
- US-A1- 2006 193 334
- US-A1- 2006 239 208

## Description

### TECHNICAL FIELD

The present invention relates to a communication apparatus and method.

### BACKGROUND ART

When using wireless communication, the possibility that activities such as eavesdropping can be carried out without a user's knowledge is comparatively higher than when using hard-wired communication, and therefore security functions, such as authentication, encryption, and so on are of high importance.

With wireless LAN communication based on the IEEE 802.11 standard, security is ensured by setting communication parameters such as SSIDs (network identifiers), frequency channels, authentication schemes, encryption schemes, encryption keys, and so on (Japanese Patent Laid-Open No. 2005-223745).

Setting such communication parameters is a highly technical process and thus cannot be easily carried out by common users. For this reason, techniques are being developed for wireless LAN communication based on the IEEE 802.11 standard that make it easy for various enterprises to perform such initial settings. WPS (Wi-Fi Protected Setup), a standard that bundles such settings together, has also been announced.

With WPS, the entity that provides the communication parameters is called the "registrar", whereas the entity that is supplied with the communication parameters by the registrar and carries out settings is called the "enrollee". An access point may function as a registrar, or there may be a different device from the access point, connected to the access point, that functions as the registrar. With WPS, there are two methods for setting the communication parameters between the registrar device and the enrollee device. One of these methods is the Personal Identification Number, or PIN method, in which an 8-digit number (PIN) that is identical for both the registrar device or access point and the enrollee device is input. The other of these methods is the Push-Button Configuration (PBC) method, in which a setting button is pushed on both the registrar device and the enrollee device within a certain period.

However, the communication specified by the simple setup schemes of various companies, WPS, and so on is carried out in infrastructure mode, which runs through an access point, and specifications dealing with ad-hoc mode are lacking. At present, wireless LANs are for the most part run in infrastructure mode through access points; however, there is the possibility that wireless LAN functionality will be included in portable devices like gaming systems, cameras, and so on in the future. An increase in such devices, which are used in ad-hoc mode that allows devices to freely construct networks among one another without requiring a fixed access point, is being forecasted.

When using ad-hoc mode, it is important to secure a safe communication path, in the same manner as when using the infrastructure mode, and thus a technique is necessary for enabling settings for securing, for example, a safe communication path to be made easily. Devices that use ad-hoc mode in particular often have limited user interfaces (UIs), and thus inputting a PIN or the like can be troublesome. The PBC method can therefore be considered important as a method for carrying out settings.

However, several technical problems arise, stemming from the unique character of ad-hoc mode, when attempting to apply WPS, which is specified by the infrastructure mode, to ad-hoc mode. In the infrastructure mode, the access point emits a beacon, which is a notification signal. The access point also returns responses to probe requests, which are network search requests.

Important parameters related to WPS are present with respect to the beacon or the response to the probe request. Whether to select the PIN method or the PBC method as the method for exchanging communication parameters can be given as an example of such parameters.

However, in ad-hoc mode, the terminal that transmits the beacon is not limited to one particular terminal. The beacon is transmitted by a single device among the devices that compose the network using an algorithm based on a certain probability. In other words, if there are two terminals, there is a 50% chance that the beacon will be transmitted from either one of those terminals. Meanwhile, with ad-hoc mode, the response to the probe request is set to be carried out by the device that transmitted the beacon.

However, in ad-hoc mode, it is not necessarily the registrar device that has transmitted the beacon. Furthermore, the registrar device does not know which device is to emit the beacon next. For this reason, the intent of the registrar device cannot be communicated to the next device with certainty. The intent of the registrar device can only be communicated when the registrar device itself transmits the beacon. With such a method, it is not possible for devices that have newly joined the network to procure information regarding the registrar device unless the registrar device itself has transmitted the beacon.

US 2006/239208 A1 discloses a wireless device that desires to be connected to a wireless network by broadcasting itself and its capabilities to a network using an information element. The information element is provided with frames, such as management frames, in a channel that is not protected or encrypted. The information element is forwarded to one or more potential registrar devices. One of the registrar devices then provides configuration information to the enrollee, for example as a registrar information element.

US 2006/193334 A1 discloses an apparatus, comprising a transceiver capable of recovering from disjoint clusters in a mesh network by adding an additional extended service set number information element in the beacon and probe response frames in at least one access point in said mesh network and all newly joining access points performing a scan of all channels to detect what channel the extended service set is running on its extended service set number and putting this extended service set number into their beacons probe responses.

### DISCLOSURE OF INVENTION

According to a first aspect of the present invention, there is provided a communication apparatus as specified in any of claims 1 to 12.

According to a second aspect of the present invention, there is provided a communication method as specified in claim 13.

According to a third aspect of the present invention, there is provided a computer-readable storage medium as specified in claim 14.

Further features of the present invention will be apparent from the following description of exemplary embodiments with reference to the attached drawings.

### BRIEF DESCRIPTION OF DRAWINGS

FIG. 1 is a diagram illustrating the configuration of a wireless network according to embodiments of the present invention.
FIG. 2 is a diagram illustrating the configuration of cameras 101 and 102 according to embodiments of the present invention.
FIG. 3 is a diagram illustrating the configuration of a printer 103 according to embodiments of the present invention.
FIG. 4 is a flowchart illustrating operations of the printer 103 according to a first embodiment of the present invention.
FIG. 5 is a flowchart illustrating operations of the camera 101 according to the first embodiment of the present invention.
FIG. 6 is a flowchart illustrating operations of the camera 102 according to the first embodiment of the present invention.
FIG. 7 is a flowchart illustrating operations of the printer 103 and the camera 101 according to the first embodiment of the present invention.
FIG. 8 is a sequence chart according to the first embodiment of the present invention.
FIG. 9 is a flowchart illustrating operations of the camera 102 according to a second embodiment of the present invention.
FIG. 10 is a flowchart illustrating operations of the printer 103 according to a third embodiment of the present invention.
FIG. 11 is a flowchart illustrating operations of the camera 101 according to the third embodiment of the present invention.
FIG. 12 is a flowchart illustrating operations of the camera 102 according to the third embodiment of the present invention.
FIG. 13 is a sequence chart according to the third embodiment of the present invention.

### BEST MODE FOR CARRYING OUT THE INVENTION

Preferred embodiments of the present invention will now be described in detail with reference to the drawings. It should be noted that the relative arrangement of the components, the numerical expressions and numerical values set forth in these embodiments do not limit the scope of the present invention unless it is specifically stated otherwise.

### (First Embodiment)

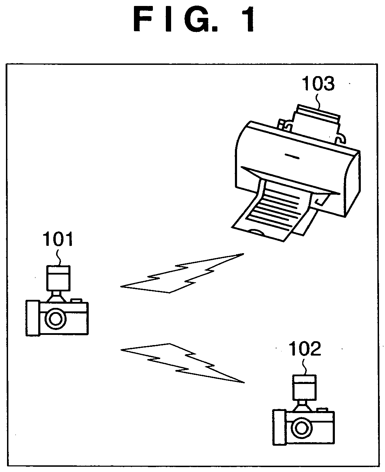

FIG. 1 is a diagram illustrating an example of the configuration of a wireless communication system that enables data transfer via wireless communication. In FIG. 1, digital cameras 101 and 102 are provided with wireless communication functionality, and are capable of transferring data among themselves or with a printer 103 using a wireless communication means if appropriate settings have been made. Such a communication mode, in which terminals communicate directly with one another without utilizing a base station, is called "ad-hoc" mode. Note that the present embodiment illustrates an example in which WPS (Wi-Fi Protected Setup) is applied to ad-hoc mode. Therefore, for the sake of simplicity, the device that provides various types of communication parameters defined by the IEEE 802.11 standard (the SSID, which is a network identifier; the frequency channel; the authentication scheme; the encryption scheme; encryption keys; and so on) to another device and manages those parameters is called the "registrar" device in the present invention. The device that is provided with these communication parameters by the registrar device and performs settings based thereupon is called the "enrollee" device. SSID is an abbreviation of "Service Set Identifier".

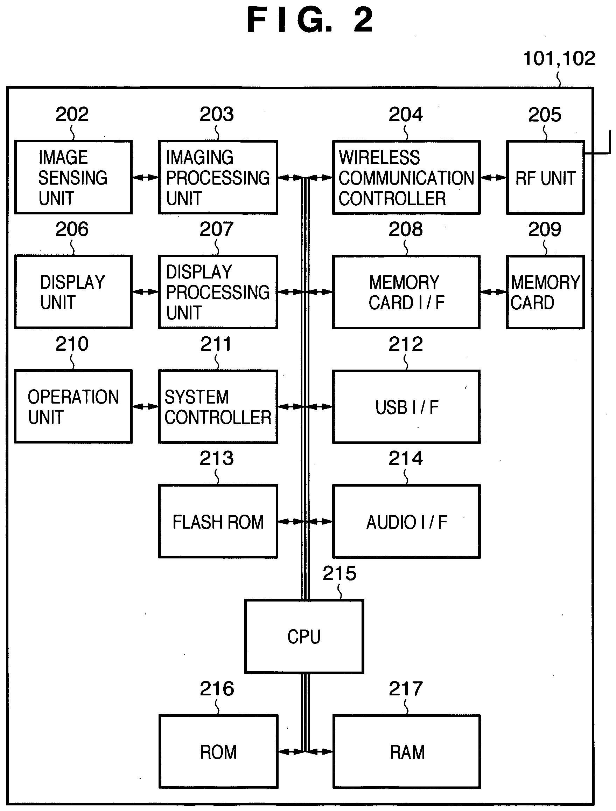

FIG. 2 is a functional block diagram of the digital cameras. It is assumed here that the digital camera 101 and the digital camera 102 both have the same functional blocks.

An operation unit 210 is connected to a CPU 215 via a system controller 211, and includes a shutter switch for the digital camera, various operational keys, and the like. An image sensing unit 202 is a block that captures an image when the shutter switch is depressed, and the captured image is processed by an imaging processing unit 203. A display unit 206 is a block that presents information to a user using an LCD display, an LED display, an audio display, or the like, and the details displayed thereby are controlled and processed by a display processing unit 207. Operations for selecting information from among that displayed in the display unit 206 and so on are carried out using the operation unit 210. To put it differently, a user interface is configured from the display unit 206 and the operation unit 210. A memory card I/F 208 is an interface for connecting a memory card 209. A USB I/F 212 is an interface for connecting an external device via USB. An audio I/F 214 is an interface for transmitting audio signals to/from an external device.

The functional portions indicated in this block diagram are processed under the control of the CPU 215; programs controlled by the CPU 215 are stored in a ROM 216 or a flash ROM 213. Data processed by the CPU 215 is written/loaded into a RAM 217 or the flash ROM 213.

A wireless communication controller 204 is a block that carries out wireless communication, and an RF unit 205 sends and receives wireless signals to and from other wireless communication devices. In some cases, the RF unit 205 and the wireless communication controller 204 are implemented using a single block, but here, they are separate from one another. Packet framing, a standard of wireless communication, processing for responding to data, data encryption and decryption, and so on are included in the functions of the wireless communication controller 204. The programs that cause the wireless communication controller 204 and the RF unit 205 to operate are normally placed in the ROM 216 and are run by the CPU 215. The flash ROM 213 is a non-volatile storage region, in which is stored wireless communication setting information and the like. In the present embodiment, wireless LAN communication, as represented by the IEEE 802.11 standard, is carried out using the wireless communication controller 204 and the RF unit 205.

Controlling the transmission of the beacon in ad-hoc mode is carried out by the RF unit 205 and the wireless communication controller 204. The beacon signal is a type of notification signal and is broadcast to the network. A random number is determined within a range called a beacon contention window (0 to CWmax) and that random number value is decremented at a constant interval, and the beacon is transmitted upon that value reaching 0. Some beacon contention windows can be changed by a program being run by the CPU 215, whereas others take on a fixed value set by the wireless communication controller 204. By making predetermined settings using a program being run by the CPU 215, information to be added to the beacon is stored in the frames actually sent by the wireless communication controller 204 and transmitted via the RF unit 205. Similarly, the added information can also be deleted by making predetermined settings using the program being run by the CPU 215.

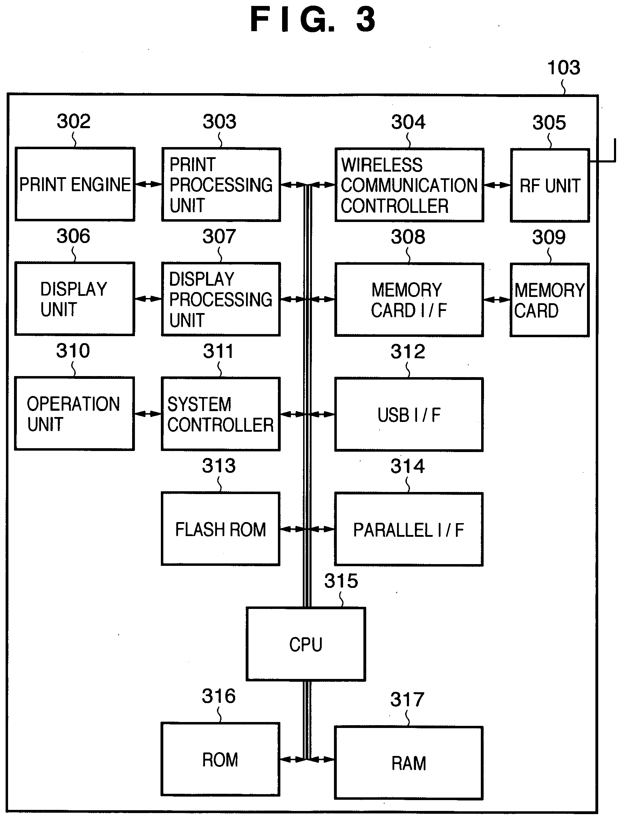

FIG. 3 illustrates the functional blocks of a printer 103. An operation unit 310 is connected to a CPU 315 via a system controller 311. A print engine 302 is a functional block that actually prints an image onto paper, whereas the image to be printed is processed by a print processing unit 303. A display unit 306 is a block that presents information to a user using an LCD display, an LED display, an audio display, or the like, and the details displayed thereby are processed by a display processing unit 307. Operations for selecting information from among that displayed in the display unit 306 and so on are carried out via the operation unit 310. A memory card I/F 308 is an interface for connecting a memory card 309. A USB I/F 312 is an interface for connecting an external device via USB. A parallel I/F 314 is an interface for connecting an external device using a parallel connection.

The functional portions indicated in this block diagram are processed under the control of the CPU 315; programs controlled by the CPU 315 are stored in a ROM 316 or a flash ROM 313. Data processed by the CPU 315 is written/loaded into a RAM 317 or the flash ROM 313.

A wireless communication controller 304 is a block that carries out wireless communication, and an RF unit 305 sends and receives wireless signals to and from other wireless communication devices. In some cases, the RF unit 305 and the wireless communication controller 304 are implemented using a single block, but here, they are separate from one another. Packet framing, a standard of wireless communication, processing for responding to data, data encryption and decryption, and so on are included in the functions of the wireless communication controller 304. The programs that cause the wireless communication controller 304 and the RF unit 305 to operate in accordance with instructions made through an application are normally placed in the ROM 316 and are run by the CPU 315. The flash ROM 313 is a non-volatile storage region, in which is stored wireless communication setting information and the like. In the present embodiment, wireless LAN communication, as represented by the IEEE 802.11 standard, is carried out using the wireless communication controller 304 and the RF unit 305.

Controlling the transmission of the beacon in ad-hoc mode is carried out by the RF unit 305 and the wireless communication controller 304. A random number is determined within a range called a beacon contention window (0 to CWmax) and that random number value is decremented at a constant interval, and the beacon is transmitted upon that value reaching 0. Some beacon contention windows can be changed by a program being run by the CPU 315, whereas others take on a fixed value set by the wireless communication controller 304. By making predetermined settings using a program being run by the CPU 315, information to be added to the beacon is stored in the frames actually sent by the wireless communication controller 304 and transmitted via the RF unit 305. Similarly, the added information can also be deleted by making predetermined settings using the program being run by the CPU 315.

The respective configurations of the digital cameras 101 and 102 and the printer 103 according to the present embodiment have thus far been described. The RF units are provided with antennae, but are not limited to types where the antennae protrude externally from the device. Portability is a major factor particularly for digital cameras, and thus it is preferable for the antenna thereof to be encased within the camera or mounted on the surface of the camera, rather than protruding externally therefrom.

In the present embodiment, the printer 103 is assumed to be the provider of the communication parameters for creating a network (that is, the registrar device). The camera 101 is assumed to already have acquired the communication parameters and completed desired settings, thus being capable of wireless communication with the printer 103. The camera 102, however, is assumed to be newly acquiring the communication parameters from the parameter provider. Thus, the camera 102 functions as the enrollee device.

The printer 103 and the camera 102 are capable of sharing identical communication parameters by pressing buttons in the respective devices at approximately the same time (this corresponding to the PBC method of WPS).

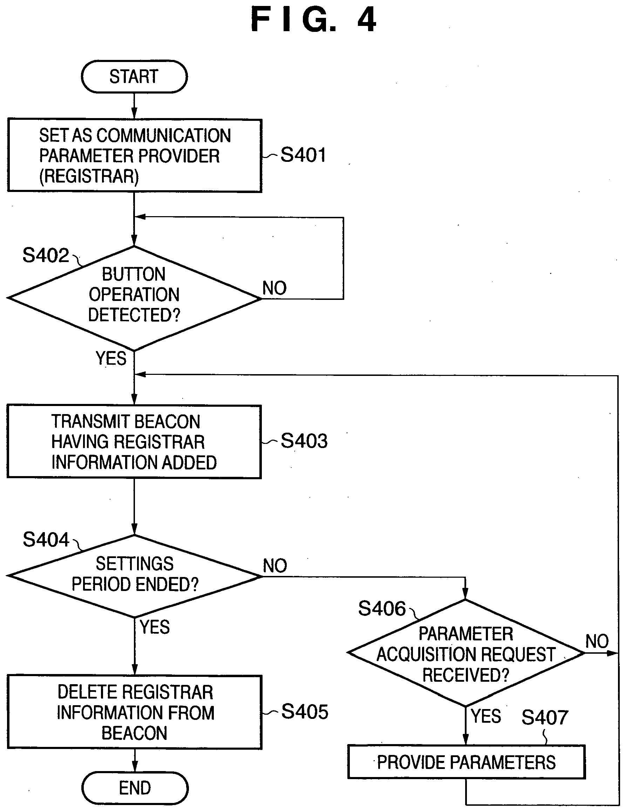

First, operations of the printer 103 shall be described with reference to the flowchart illustrated in FIG. 4. Note that the operations illustrated in FIG. 4 are performed by the CPU 315 executing a program stored in the ROM 316 or the flash ROM 313 and controlling the various constituent elements of the printer 103. Furthermore, the printer 103 exchanges a beacon with the camera 101 in accordance with a certain algorithm. In accordance with this algorithm, the printer 103 transmits the beacon upon taking on the role of beacon transmitter, whereas the camera 101 transmits the beacon upon taking on the role of beacon transmitter. Therefore, when a network is configured with the printer 103 and the camera 101 transmitting the beacon to one another, there are various situations for transmission, such as where only one of the devices transmits the beacon, the beacon is transmitted randomly between the devices, and so on. The present embodiment is applicable to such situations as well.

First, the CPU 315 sets the printer 103 as the communication parameter provider (registrar) in accordance with an instruction from a user (S401). While all devices are capable of becoming communication parameter providers in the present embodiment, devices are set as the communication parameter acquirer as a default. For this reason, in the present embodiment, it is assumed that the registrar is selected by consensus of the users and a user has performed instructions and settings via the operation unit 310. This is not intended to limit the present embodiment in any particular way; for example, the procedure for determining the registrar may be a manual procedure, or, alternatively, a mechanism for automatically determining the registrar may be devised.

Next, upon detecting that a user has operated a button on the operation unit 310 for exchanging the communication parameters (S402), the CPU 315 of the printer 103 adds registrar information to the beacon as additional information, and transmits the beacon (S403). The button operation for exchanging communication parameters may be carried out using a software button displayed as the result of plural operations such as selecting a desired function while changing a menu displayed in the display unit 306.

The registrar information includes information indicating that a parameter provision service is currently being executed, information regarding authentication performed using the PBC method, and so on. This information is stored in the beacon in a specific format. Furthermore, the registrar information includes information that has the MAC address (identification information) indicating the destination of the registrar, in addition to content similar to the WPSIE (WPS Information Element) specified in WPS. Accordingly, when the printer 103, serving as the registrar device, has transmitted a beacon, that beacon includes the MAC address of the printer 103.

Furthermore, the operations in the present explanation are being carried out in ad-hoc mode, and therefore the transmission of the beacon is carried out when the printer 103 has taken on the role of beacon transmitter.

Taking safety into consideration, the period during which the communication parameters are provided with the PBC method is a specific period (settings period) starting with the start of the parameter provision service; during this period, the printer 103 adds the registrar information to the beacon and transmits the beacon (S404). When this period ends, the CPU 315 deletes the registrar information from the beacon to be transmitted (S405).

The CPU 315 monitors whether or not requests for parameter acquisition are being sent by an enrollee device until the settings period ends (S406). Upon receiving a request for parameter acquisition from an enrollee device, the CPU 315 provides the communication parameters it itself manages to the enrollee device that transmitted the request (S407).

When the provision of the communication parameters ends, the procedure returns to S403, and the process of providing the communication parameters to other enrollee devices is carried out until the settings period ends. Although the process of providing the communication parameters to other enrollee devices is carried out until the settings period ends in the present explanations, it should be noted that the process may end once the communication parameters have been provided to the enrollee devices. Such a scheme makes it possible to avoid providing the communication parameters to an unintended device.

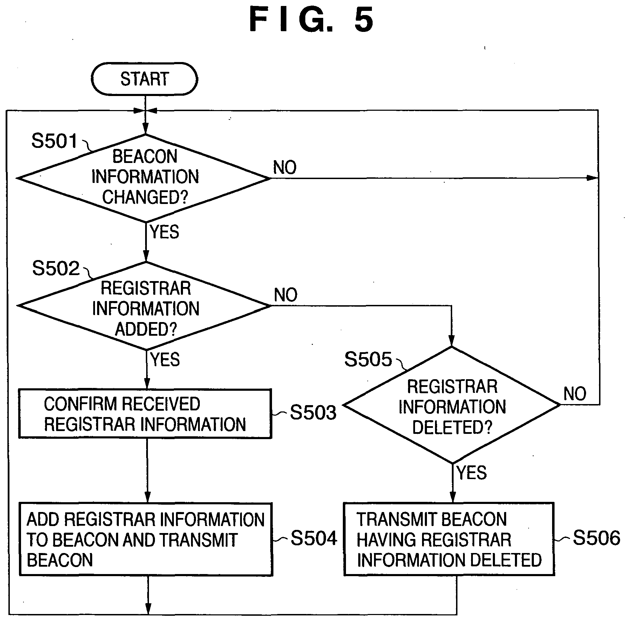

Next, operations of the camera 101, which has already exchanged communication parameters with the printer 103 (that is, has already been provided with the communication parameters), shall be described with reference to the flowchart illustrated in FIG. 5. Note that the operations illustrated in FIG. 5 are performed by the CPU 215 executing a program stored in the ROM 216 or the flash ROM 213 and controlling the various constituent elements of the camera 101.

The CPU 215 of the camera 101 monitors the beacons transmitted from the printer 103, and upon receiving a beacon from the printer 103, the CPU 215 determines whether or not the content of the present beacon has changed with respect to the content of the beacon previously received from the printer 103 (S501). Note that the camera 101 takes on the role of beacon transmitter and transmits a beacon even if it is currently monitoring the beacons from the printer 103. In order to determine whether or not the information in the received beacon has changed, the CPU 215 of the camera 101 stores the information included in a beacon in the RAM 217 upon receiving that beacon. Because address information of the device that transmitted the beacon is included within this information, the CPU 215 compares the content of beacons from a device having the same address, and thus determines whether or not the beacon information from the same device has changed (S501).

If the results of the determination indicate that the beacon information has changed, it is determined whether the change has resulted from registrar information being added to the beacon or deleted from the beacon (S502, S505).

If registrar information has been added, the CPU 215 checks the content thereof, and confirms that the WPSIE and the MAC address of the communication parameter provider is present (S503). The received registrar information (the WPSIE and the MAC address of the printer 103 added by the printer 103) to the beacon to be transmitted by the camera 101 (S504). When taking on the role of beacon transmitter, the camera 101 transmits a beacon to which the received registrar information (the WPSIE and the MAC address, added by the printer 103) has been added. Devices that share identical communication parameters with a network in which a registrar device is already present, and which are capable of communication using the same network, add the registrar information received from the registrar device to their own beacon, and transmit that beacon. This makes it possible for devices (enrollees) that have received that beacon (a beacon from a device aside from the registrar) to confirm the information of the registrar device. Accordingly, the intent of the registrar device (in other words, the registrar information) can be efficiently communicated to other devices even in ad-hoc mode, where it is not necessarily always the registrar device that is transmitting the beacon.

If the change in the received beacon information is a change in which the registrar information has been deleted (S505), the registrar information is deleted from the beacon transmitted by the camera 101 (S506). Accordingly, the registrar information is deleted from the beacons transmitted by the camera 101 thereafter.

The period in which the communication parameters are provided by the printer 103 ends after a certain time limit. For this reason, the registrar information added to the beacon transmitted by the printer 103 is deleted once that period has ended. When the registrar information is deleted from the beacon transmitted by the printer 103, the registrar information is also deleted from the beacon transmitted by the camera 101. It is therefore possible to prevent information regarding the registrar device from being announced by a device aside from the registrar device despite the fact that the registrar device has already stopped the parameter provision service. Accordingly, the security outside of the period of the parameter provision service can also be improved.

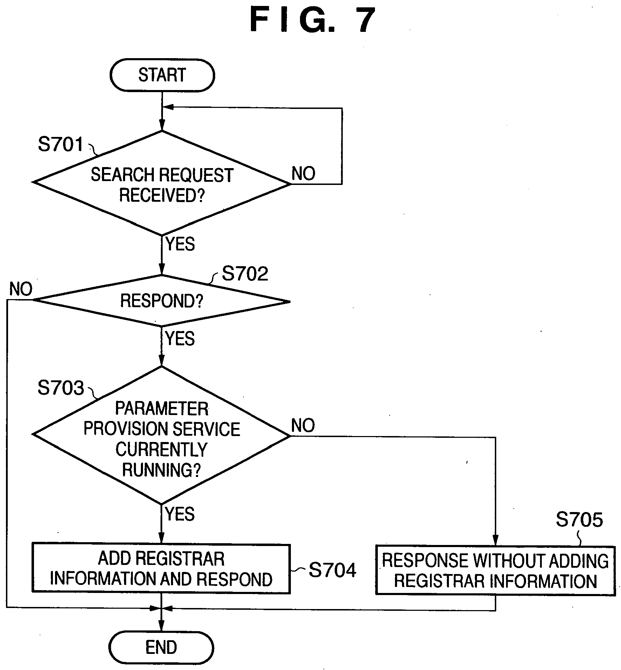

Next, operations performed when the printer 103 and the camera 101 have received a search request (probe requests, search signals) shall be described with reference to the flowchart illustrated in FIG. 7. Note that the operations indicated in FIG. 7 are performed in parallel with the operations indicated in FIGS. 4 and 5. Furthermore, if the printer 103 is executing the operations indicated in FIG. 7, the operations are performed by the CPU 315 executing a program stored in the ROM 316 or the flash ROM 313 and controlling the various constituent elements of the printer 103. However, if the camera 101 is executing the operations indicated in FIG. 7, the operations are performed by the CPU 215 executing a program stored in the ROM 216 or the flash ROM 213 and controlling the various constituent elements of the camera 101.

Upon receiving a network search request (S701), the CPU 215 or 315 determines whether or not to respond to the search request (S702). Ad-hoc mode stipulates that the device that transmitted a beacon immediately prior to the reception of the search request is to respond to the search request. Therefore, the CPU 215 or 315 determines whether or not its device transmitted a beacon immediately prior to the reception of the search request, and if its device is the device that transmitted a beacon immediately prior to the reception, it determines that its device is the device that is to respond to the search request (the responding device) (S702). If another device transmitted a beacon immediately prior to the reception of the search request, and its own device did not transmit a beacon (S702), the CPU 215 or 315 determines not to respond to the search request, and the process ends.

If the CPU 215 or 315 has determined that its device is the responding device, it then determines whether its device is currently running the parameter provision service (S703). The CPU 315 determines that the parameter provision service is currently being run if a button operation has been detected in S402 and the device has moved into a state in which the parameter provision service is being run. Meanwhile, the CPU 215 determines that the parameter provision service is currently being run if there has been a change in the beacon information received in S501 and that change is a change in which registrar information has been added to the received beacon. In other words, the CPU 215 determines that the parameter provision service is currently being run when the device that transmitted the beacon (the registrar device) is currently running the parameter provision service, and the CPU 215's own device adds the registrar information from the registrar device to a beacon and transmits that beacon.

When the CPU 215 or 315 determines that the parameter provision service is currently being run, the CPU 215 or 315 adds the registrar information (the WPSIE and the MAC address of the communication parameter provider) in the response to the search request, and transmits the response (S704). However, when the CPU 215 or 315 determines that the parameter provision service is not currently being run, the CPU 215 or 315 transmits the response to the search request without adding the registrar information (the WPSIE and the MAC address of the communication parameter provider) to the response (S705). The CPU 215 and 315 transmit the response to the search request to the device that transmitted the search request through unicast.

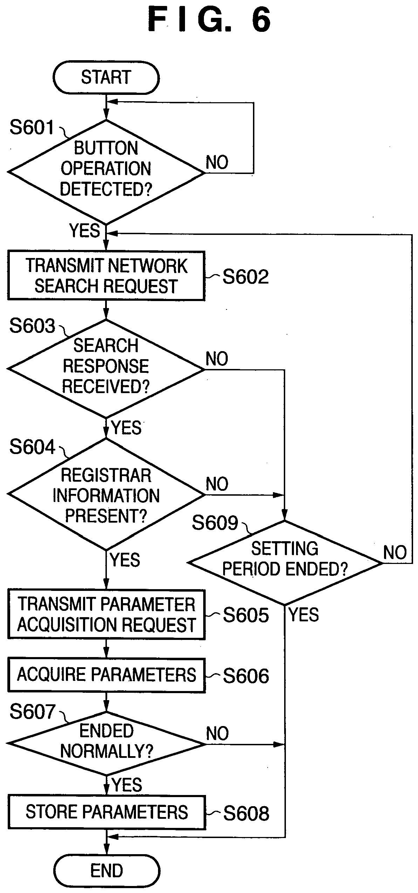

Next, operations performed by the camera 102 when attempting to acquire the communication parameters shall be described with reference to the flowchart illustrated in FIG. 6. Note that the operations illustrated in FIG. 6 are performed by the CPU 215 executing a program stored in the ROM 216 or the flash ROM 213 and controlling the various constituent elements of the camera 102.

Upon detecting a button operation, performed by the user using the operation unit 210 in order to exchange communication parameters (S601), the CPU 215 of the camera 102 transmits a network search request via the wireless communication controller 204 and the RF unit 205 (S602). The CPU 215 of the camera 102 then monitors whether or not a response to the search request has been received (S603). The procedure moves to S604 if a response is received by the time the settings period has ended following the detection of the button operation in S601. If a response is not received, the network search request is transmitted periodically until the settings period ends (S609).

In S604, it is determined whether or not registrar information is present in the received response. If registrar information is not present, the procedure moves to S609, where the network search request is transmitted periodically until the settings period ends. If the settings period ends (S609) without a response including the registrar information being received, the process ends. If registrar information is present in the received response (S604), a parameter acquisition request is transmitted to the MAC address of the communication parameter provider included in the registrar information, thereby requesting the communication parameters to be provided (S605). The communication parameters are then acquired, having been provided by the communication parameter provider (S606). With regards to a specific procedure for the communication parameter provision process, the communication parameters are exchanged having included therein a key for safety purposes; a public key under the Diffie-Hellman, RSA, or other such protocol is used as such a key.

If the communication parameter acquisition has ended normally (S607), the acquired parameters are stored in the flash ROM 213, the RAM 217, or the like (S608). If the communication parameter acquisition has not ended normally, the process ends. Note that the communication parameters stored in the memory are set in the wireless communication controller 204 under an instruction from the CPU 215; the camera 102 carries out wireless communication in accordance with the set communication parameters. This setting may be performed automatically upon the successful acquisition of the communication parameters, or may be performed as a result of an operation performed by the user through the operation unit 210. Note that in the present embodiment, it is assumed that the CPU 215 automatically sets the communication parameters acquired upon the acquisition thereof succeeding in the wireless communication controller 204, so that the camera 102 can acquire the communication parameters in order to perform wireless communication with the printer 103.

The enrollee device transmits the parameter acquisition request to the address of the registrar device included in the registrar information, and therefore the enrollee device can receive the communication parameters from the registrar device even if the search request has been transmitted by a device aside from the registrar device.

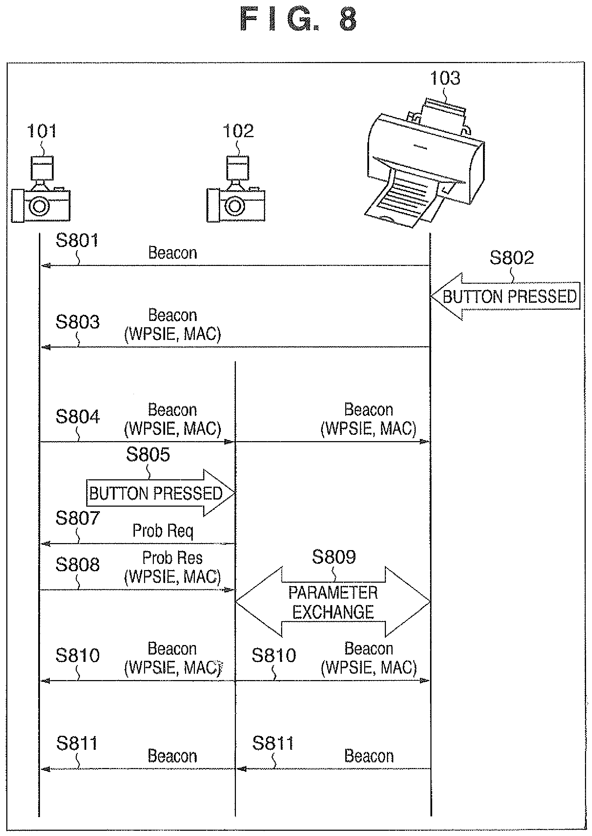

FIG. 8 is a sequence chart illustrating an overall sequence carried out between the camera 101, the camera 102, and the printer 103.

The camera 101 and the printer 103 operate on a network that they have created. In S801, the printer 103 transmits a beacon. A user operates the operation unit 310 of the printer 103, sets the printer 103 as the registrar device, and operates a button for executing the communication parameter provision process (S802). In response to this, the printer 103 adds registrar information (the WPSIE and the MAC address of the printer 103) to the beacon, and transmits the beacon (S803).

Having received this beacon, the camera 101 adds the information to a beacon without modifying that information, and transmits the beacon (S804).

The user of the camera 102, which has newly joined the network, operates a button for executing the communication parameter provision process (S805). Upon detecting the stated operation, the camera 102 transmits a network search request (Prob Req) (S807). In FIG. 8, this request is transmitted to the camera 101, which transmitted a beacon immediately before the button was operated; however, this request may be broadcasted to all devices.

Having received this search request, the camera 101 returns a response to the search request (Prob Res) (S808). This response includes the registrar information of the printer 103.

Upon receiving the response to the search request, the camera 102 acquires the WPSIE information and the MAC address present in the response. The camera 102 can thereby confirm that the registrar device is the printer 103. After this, the camera 102 requests that the printer 103, which is the registrar, provide the communication parameters, and then receives the communication parameters (exchange of communication parameters) (S809).

Upon receiving the communication parameters from the printer 103, the camera 102 sets the received communication parameters, and then joins the same network as the printer 103 and the camera 101. Having joined the same network, the camera 102 is therefore also a terminal that configures the network, and thus transmits the beacon in the manner indicated in the flowchart of FIG. 5 (S810). When the period for settings ends, the registrar information is deleted from the beacon transmitted by the printer 103 (S811). Thereafter, the registrar information is deleted from beacons transmitted from other devices as well.

Note that a process that compares the registrar information included in the search request with the registrar information included in the beacon may be added after S604, in addition to the operation of the camera 102. If the comparison indicates that the instances of registrar information match, the procedure moves to S605, where the parameter acquisition request is transmitted. If the instances of registrar information do not match, there is the possibility that plural registrars currently running the parameter provision service are present, and that undesired communication parameters may be received; there is also the possibility that a malicious device is attempting to provide invalid communication parameters.

Therefore, the process may be ended if the registrar information in the search request and the registrar information in the beacon do not match. This makes it possible to improve the security.

Up until now, an ad-hoc communication scheme in which specific information transmitted by a communication terminal is taken by the next different terminal and distributed has not been considered. Providing such a scheme makes it possible for terminals that have newly joined the network to quickly detect which terminal is the registrar based on the information included in the beacons, search requests, and so on.

Accordingly, the provision and reception of communication parameters can be carried out with efficiency, and the communication parameters can be easily set, even in ad-hoc mode, where there is no fixed access point.

### (Second Embodiment)

In the present embodiment, the enrollee device uses registrar information included in a received beacon to request the communication parameters.

The network configuration and the configurations of each of the devices are the same as described in the first embodiment, and thus descriptions thereof shall be omitted. Furthermore, the operations of the camera 101 and the printer 103 are also the same as described in the first embodiment, and thus descriptions thereof shall also be omitted.

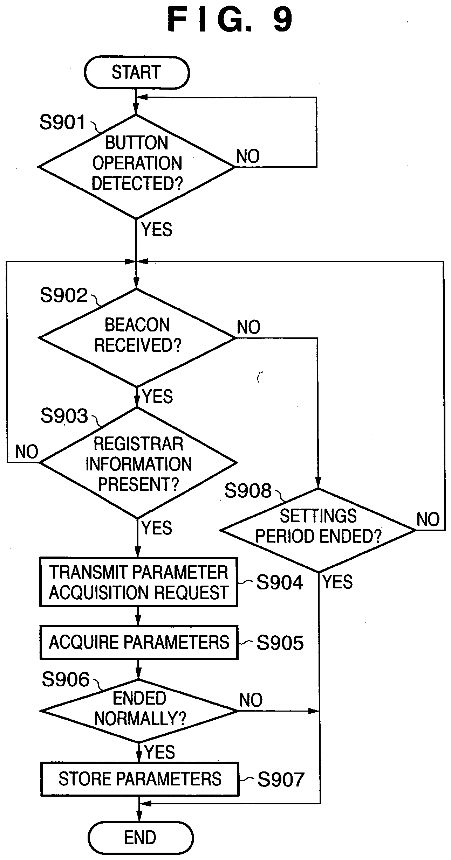

Hereinafter, operations performed by the camera 102 when attempting to acquire the communication parameters shall be described with reference to the flowchart illustrated in FIG. 9. Note that the operations illustrated in FIG. 9 are performed by the CPU 215 executing a program stored in the ROM 216 or the flash ROM 213 and controlling the various constituent elements of the camera 102.

Upon detecting a button operation, performed by the user using the operation unit 210 in order to exchange communication parameters (S901), the CPU 215 of the camera 102 monitors whether or not a beacon has been received (S902). Upon receiving a beacon, it is determined whether or not registrar information is present in the received beacon (S903). If the registrar information is not present, the procedure returns to S902, where whether or not a beacon has been received is once again monitored. If a beacon including registrar information is not received by the time the settings period has ended following the detection of the button operation in S901, the process ends (S908).

If, however, registrar information is present in the received beacon (S903), a parameter acquisition request is transmitted to the MAC address of the communication parameter provider included in the registrar information, thereby requesting the communication parameters to be provided (S904). The communication parameters are then acquired, having been provided by the communication parameter provider (S905). With regards to a specific procedure for the communication parameter provision process, the communication parameters are exchanged having included therein a key for safety purposes; a public key under the Diffie-Hellman, RSA, or other such protocol is used as such a key.

If the communication parameter acquisition has ended normally (S906), the acquired parameters are stored in the flash ROM 213, the RAM 217, or the like (S907). If the communication parameter acquisition has not ended normally, the process ends. Note that the communication parameters stored in the memory are set in the wireless communication controller 204 under an instruction from the CPU 215; the camera 102 carries out wireless communication in accordance with the set communication parameters. This setting may be performed automatically upon the successful acquisition of the communication parameters, or may be performed as a result of an operation performed by the user through the operation unit 210. Note that in the present embodiment, it is assumed that the CPU 215 automatically sets the communication parameters acquired upon the acquisition thereof succeeding in the wireless communication controller 204, so that the camera 102 can acquire the communication parameters in order to perform wireless communication with the printer 103.

According to the present embodiment, the communication parameters can be received by acquiring the registrar information from a beacon, without a network search request being transmitted.

### (Third Embodiment)

The present embodiment discusses measures taken when beacon information has been tampered with.

The present embodiment prevents a malicious third party from entering in between two terminals that have properly had their buttons pushed, acting as a registrar and exchanging communication parameters, and stealing sensitive data.

The network configuration and the configurations of each of the devices are the same as described in the first embodiment, and thus descriptions thereof shall be omitted. Furthermore, the printer 103 is assumed to be the provider of the communication parameters for creating a network in the present embodiment as well. The camera 101 has already acquired the communication parameters and completed desired settings, and is carrying out wireless communication. The camera 102, is attempting to newly acquire the communication parameters. The printer 103 and the camera 102 are capable of sharing identical communication parameters by pressing buttons in the respective devices at approximately the same time (this corresponding to the PBC method of WPS).

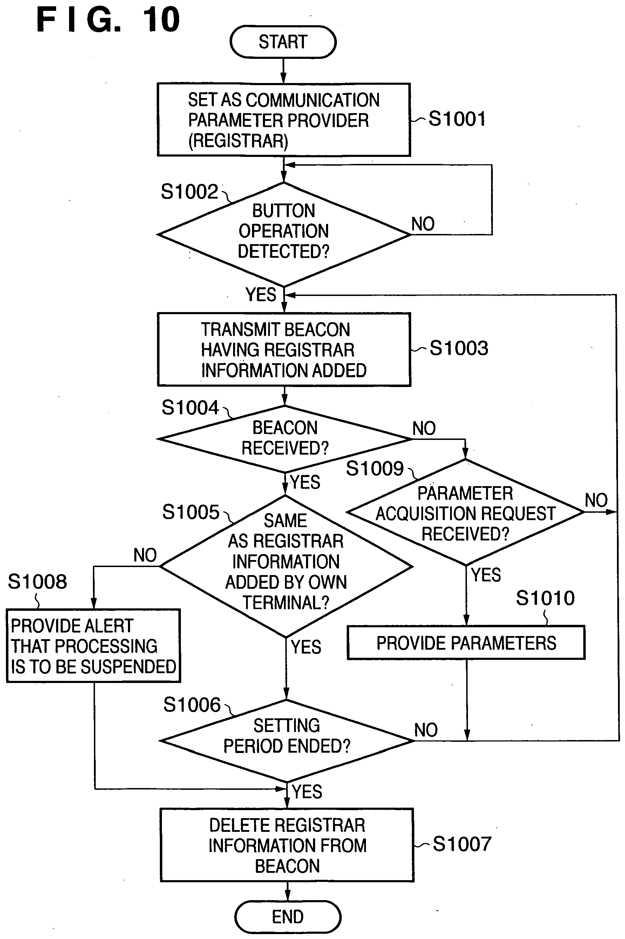

Operations of the printer 103 shall be described with reference to the flowchart illustrated in FIG. 10. Note that the operations illustrated in FIG. 10 are performed by the CPU 315 executing a program stored in the ROM 316 or the flash ROM 313 and controlling the various constituent elements of the printer 103. Furthermore, the printer 103 exchanges a beacon with the camera 101 in accordance with a certain algorithm. In accordance with this algorithm, the printer 103 transmits the beacon upon taking on the role of beacon transmitter, whereas the camera 101 transmits the beacon upon taking on the role of beacon transmitter. Therefore, when a network is configured with the printer 103 and the camera 101 transmitting the beacon to one another, there are various situations for transmission, such as where only one of the devices transmits the beacon, the beacon is transmitted randomly between the devices, and so on. The present embodiment is applicable to such situations as well.

First, the CPU 315 sets the printer 103 as the communication parameter provider (registrar) in accordance with an instruction from a user (S1001). While all devices are capable of becoming communication parameter providers in the present embodiment, devices are set as the communication parameter acquirer as a default. For this reason, in the present embodiment, it is assumed that the registrar is selected by consensus of the users and a user has performed instructions and settings via the operation unit 310. This is not intended to limit the present embodiment in any particular way; for example, the procedure for determining the registrar may be a manual procedure, or, alternatively, a mechanism for automatically determining the registrar may be devised.

Next, upon detecting that a user has operated a button on the operation unit 310 for exchanging the communication parameters (S1002), the CPU 315 of the printer 103 adds registrar information to the beacon, and transmits the beacon (S1003). The button operation for exchanging communication parameters may be carried out using a software button displayed as the result of plural operations such as selecting a desired function while changing a menu displayed in the display unit 306.

The stated registrar information is information indicating that a parameter provision service is currently being executed, information regarding authentication performed using the PBC method, and so on. This information is stored in the beacon in a specific format. Furthermore, the registrar information is information that has the MAC address indicating the destination of the registrar, in addition to content similar to the WPSIE (WPS Information Element) specified in WPS.

Furthermore, the operations in the present explanation are being carried out in ad-hoc mode, and therefore the transmission of the beacon is carried out when the printer 103 has taken on the role of beacon transmitter.

Upon receiving a beacon from another terminal (S1004), the CPU 315 checks whether registrar information identical to the registrar information added by its own terminal has been added to the beacon (S1005). In other words, the CPU 315 confirms that the registrar information added by its own terminal has not been modified or deleted. To put it more specifically, the CPU 315 confirms whether registrar information different from the registrar information added by its own terminal has been added or the registrar information added by its own terminal has not been deleted. To carry out this confirmation, the CPU 315 compares the registrar information (WPSIE and MAC address) added by its own terminal with the registrar information (WPSIE and MAC address) in the received beacon. Alternatively, hash values of the stated information elements may be calculated and stored when the registrar information is added to the beacon in S1003, and the confirmation regarding modifications and deletions may thus be carried out by comparing the calculated hash values with the hash values in the received information.

If the results of the determination in S1005 indicated that the compared instances of registrar information are not the same (i.e. have been modified or deleted), an alert message is transmitted using a broadcast frame capable of being received by all terminals on the network (S1008). An alert indicating that the communication parameter provision service process is to be suspended is communicated by this alert message (S1008). If the compared instances of registrar information are not the same (i.e. have been modified or deleted), as in this case, it is possible that somebody has altered the beacon information in an attempt to tamper with it. Therefore, the other terminals are warned, and the process is suspended. The broadcast frame may be transferred using data packets that flow in a particular manner, such as the IEEE 802.11 management frame of authentication including an EAP header. Furthermore, when carrying out the alert in S1008, the alert message may be displayed in the display unit 306, thereby notifying the user that the communication parameter provision service process is to be suspended.

If the instances of registrar information are the same, it is checked whether the settings period for providing the communication parameters has ended (S1006), and if the settings period has not ended, the procedure returns to S1003. Taking safety into consideration, the period during which the communication parameters are provided with the PBC method is a specific period (settings period) starting with the start of the parameter provision service; during this period, the printer 103 adds the registrar information to the beacon and attempts to transmit the beacon (S1003).

When the settings period ends (S1006), the registrar information (WPSIE and MAC address) is deleted from the beacon (S1007).

If a beacon has not been received, the CPU 315 monitors whether or not requests for parameter acquisition are being sent by an enrollee device (S1009). Upon receiving a request for parameter acquisition from an enrollee device, the CPU 315 provides the communication parameters it itself manages to the enrollee device that transmitted the request (S1010).

When the provision of the communication parameters ends, the procedure returns to S1003, and the process of providing the communication parameters to other enrollee devices is carried out until the settings period ends. Although the process of providing the communication parameters to other enrollee devices is carried out until the settings period ends in the present explanations, it should be noted that the process may end once the communication parameters have been provided to the enrollee devices. Such a scheme makes it possible to avoid providing the communication parameters to an unintended device.

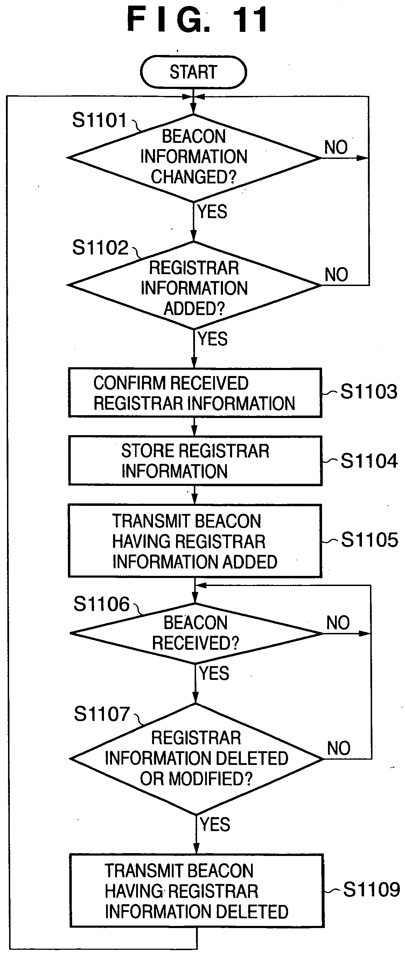

Next, operations of the camera 101, which is present on the same network as the printer 103 and has already exchanged communication parameters with the printer 103, shall be described with reference to the flowchart illustrated in FIG. 11. Note that the operations illustrated in FIG. 11 are performed by the CPU 215 executing a program stored in the ROM 216 or the flash ROM 213 and controlling the various constituent elements of the camera 101.

The CPU 215 of the camera 101 monitors the beacons, and upon receiving a beacon, determines whether or not the content of the present beacon has changed with respect to the content of the beacon previously received from the printer 103 (S1101). Note that the camera 101 takes on the role of beacon transmitter and transmits a beacon even if it is currently monitoring the beacons from the printer 103. In order to determine whether or not the information in the received beacon has changed, the CPU 215 of the camera 101 stores the information included in a beacon in the RAM 217 upon receiving that beacon. Because address information of the device that transmitted the beacon is included within this information, the CPU 215 compares the content of beacons from a device having the same address, and thus determines whether or not the beacon information from the same device has changed (S1101).

If the received beacon information has changed, it is determined whether the change has resulted from registrar information being added to the beacon (S1102). If the change has not resulted from registrar information being added, the procedure returns to S1101.

If registrar information has been added, the CPU 215 checks the content thereof, and confirms that the WPSIE information element and the MAC address of the communication parameter provider is present (S1103). The registrar information (WPSIE and MAC address) is then stored in a memory (the flash ROM 213 or the RAM 217) (S1104). The storage method may have the registrar information stored as-is, or hash values of the WPSIE and the MAC address may be stored. The received registrar information (the WPSIE and the MAC address of the printer 103 added by the printer 103) is then added to the beacon to be transmitted by the camera 101 (S1105). When taking on the role of beacon transmitter, the camera 101 transmits a beacon to which the received registrar information (the WPSIE and the MAC address, added by the printer 103) has been added. Devices that share identical communication parameters with a network in which a registrar device is already present, and which are capable of communication using the same network, add the registrar information received from the registrar device to their own beacon, and transmit that beacon. Devices (enrollees) that have received that beacon (a beacon from a device aside from the registrar) can thus confirm the information of the registrar device. Accordingly, the intent of the registrar device (in other words, the registrar information) can be efficiently communicated to other devices even in ad-hoc mode, where it is not necessarily always the registrar device that is transmitting the beacon.

Next, the CPU 215 of the camera 101 monitors whether or not a beacon has been received (S1106). When a beacon is received, the CPU 215 checks whether the registrar information stored in S1104 has been deleted or modified (S1107). If the registrar information has not been deleted or modified, the procedure returns to S1106, where the CPU 215 monitors whether or not a beacon has been received.

If the registrar information added to the received beacon has been deleted or modified, the registrar information (the WPSIE and the MAC address of the printer 103 added by the printer 103) is deleted from the beacon to be transmitted by the camera 101 (S1109). Accordingly, the registrar information is deleted from the beacons transmitted by the camera 101 thereafter.

Such deletion or modification of the registrar information added to the beacon can be considered to be indicative of a third party tampering with the registrar information. Accordingly, deleting the registrar information from the beacon transmitted by the camera 101 prevents damage that could be caused by tampering. Furthermore, even if the registrar device selected by the user (the printer 103) has transmitted the registrar information with the beacon, or in other words, the communication parameter provision service has been terminated, the registrar information of the beacon received by the camera 101 is deleted or modified. In such a case, the registrar information is also deleted from the beacon transmitted by the camera 101, and therefore devices aside from the registrar device can be prevented from announcing information regarding the registrar device, despite the fact that the registrar device has ended the parameter provision service.

Operations performed when the printer 103 and the camera 101 have received a search request (probe requests, search signals) are the same as those in the first embodiment and run according to the flowchart illustrated in FIG. 7. Descriptions thereof shall therefore be omitted.

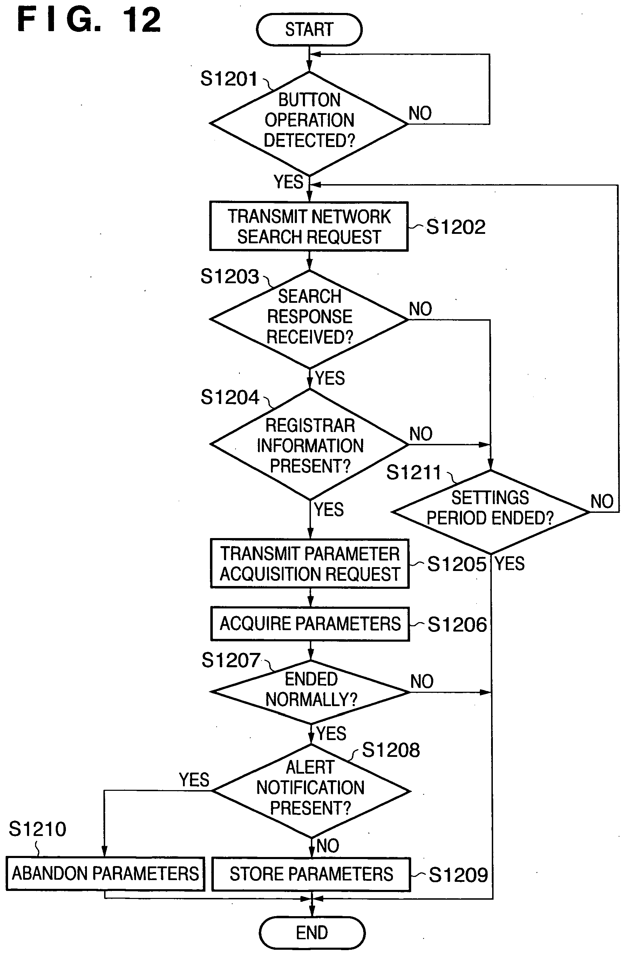

Next, operations performed by the camera 102 when attempting to acquire the communication parameters shall be described with reference to the flowchart illustrated in FIG. 12. Note that the operations illustrated in FIG. 12 are performed by the CPU 215 executing a program stored in the ROM 216 or the flash ROM 213 and controlling the various constituent elements of the camera 102.

Upon detecting a button operation, performed by the user using the operation unit 210 in order to exchange communication parameters (S1201), the CPU 215 of the camera 102 transmits a network search request via the wireless communication controller 204 and the RF unit 205 (S1202). The CPU 215 of the camera 102 then monitors whether or not a response to the search request has been received (S1203). The procedure moves to S1204 if a response is received by the time the settings period has ended following the detection of the button operation in S1201. If a response has not been received, the network search request is transmitted periodically until the settings period ends (S1211).

In S1204, it is checked whether or not the registrar information (the WPSIE and MAC address of the communication parameter provider) is present in the received response (S1204). If the information is not present, the network search request is transmitted periodically until the settings period ends (S1211). If the settings period ends (S1211) without a response including the registrar information being received, the process ends. If registrar information is present in the received response .(S1204), a parameter acquisition request is transmitted to the MAC address of the communication parameter provider included in the registrar information, thereby requesting the communication parameters to be provided (S1205). The communication parameters are then acquired, having been provided by the communication parameter provider (S1206). With regards to a specific procedure for the communication parameter provision process, the communication parameters are exchanged having included therein a key for safety purposes; a public key under the Diffie-Hellman, RSA, or other such protocol is used as such a key.

If the communication parameter acquisition has not ended normally (S1207), the process ends. When the acquisition of the communication parameters has ended normally (S1207), it is checked, for a specific amount of time, whether or not an alert message has arrived, communicating an alert (S1208). If an alert message has not arrived, the acquired parameters are stored in the flash ROM 213, the RAM 217, or the like (S1209). If, however, an alert message has arrived, the acquired parameters are abandoned (S1210). Note that the communication parameters stored in the memory are set in the wireless communication controller 204 under an instruction from the CPU 215; the camera 102 carries out wireless communication in accordance with the set communication parameters. This setting may be performed automatically upon the successful acquisition of the communication parameters, or may be performed as a result of an operation performed by the user through the operation unit 210. Note that in the present embodiment, it is assumed that the CPU 215 automatically sets the communication parameters acquired upon the acquisition thereof succeeding in the wireless communication controller 204, so that the camera 102 can acquire the communication parameters in order to perform wireless communication with the printer 103.

Furthermore, if the communication parameters have been abandoned, a message notifying the user that the communication parameter acquisition failed is displayed in the display unit 206. Having confirmed this notification, the user can once again commence the process for setting the communication parameters. Moreover, the fact that the communication parameters have been abandoned due to the alert notification from the registrar device (the printer 103) may be displayed at the time of this user notification. Doing so makes it possible for the user to detect the presence of a malicious third party and terminate the process for setting the communication parameters.

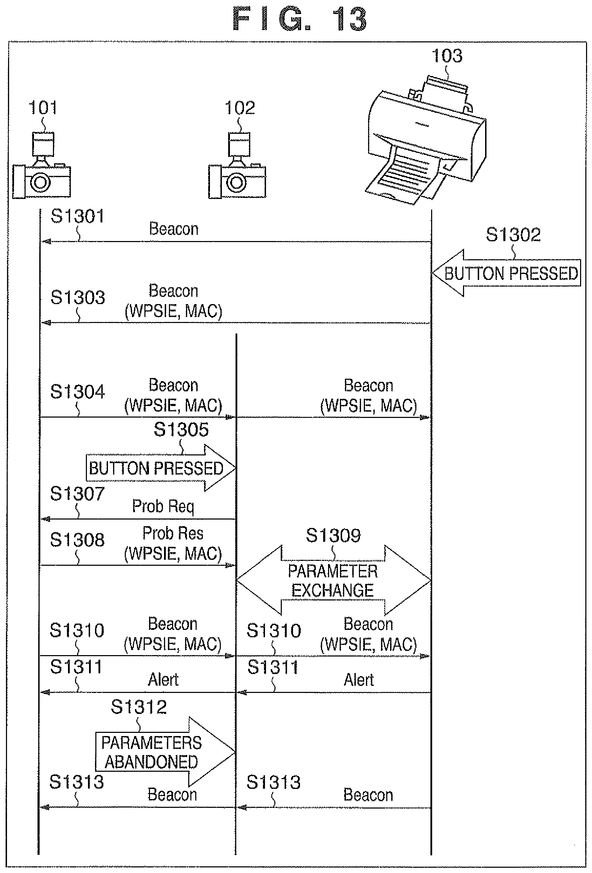

FIG. 13 is a sequence chart illustrating an overall sequence carried out between the camera 101, the camera 102, and the printer 103.

FIG. 13 shows the same sequence and the same process as that shown in FIG. 8, up until S1309, where the parameter exchange is carried out. In the example illustrated in FIG. 13, however, the camera 101 adds different registrar information to a beacon and transmits that beacon in S1310. Accordingly, in S1311, the printer 103 transmits an alert message. Having received this alert message, the camera 102 abandons the parameters (S1312).

As described thus far, it is possible, in the case where the registrar information added to the beacon has been tampered with, to prevent communication parameters based on the tampered-with information from being set, thus making the safe exchange of communication parameters possible.

In the above descriptions, the enrollee device transmits the parameter acquisition request using information included in the registrar information added to the response to the search request. However, it should be noted that the communication parameters may be requested using the registrar information included in the received beacon, as is the case in the second embodiment.

According to the above descriptions, a communication apparatus determines whether the content of a notification signal transmitted by another communication apparatus has been changed. Based on this determination, the communication apparatus adds specific additional information included in the notification signal it received to the notification signal it is to transmit, or deletes specific additional information from the notification signal it is to transmit, and transmits the signal.

Here, the configuration described above may take on the configuration described hereinafter. That is, the communication apparatus transmits the notification signal in accordance with the other communication apparatus and a predetermined algorithm. Furthermore, determining whether the content of the notification signal has changed is carried out by determining whether additional information has been added to the received notification signal, deleted from the notification signal, or modified. The additional information includes information indicating that the communication parameter provision service is currently running, identification information of the device that executes the communication parameter provision service, or information for authentication. Furthermore, when a search signal has been received from another communication apparatus, the communication apparatus determines whether or not to respond to a search signal, and furthermore determines whether or not the other communication apparatus is running a communication parameter provision service. The communication apparatus adds specific additional information included in the received notification signal to a response signal made in response to the search signal and transmits the response signal, or transmits the response signal without adding the specific additional information, based on the response determination and the service determination.

In the above descriptions, the communication apparatus also adds specific additional information to a notification signal based on an operation performed by a user, and transmits the notification signal; furthermore, the communication apparatus furthermore determines whether or not the additional information added to the transmitted notification signal has been added to a notification signal transmitted by another communication apparatus. The communication apparatus communicates an alert in accordance with this determination.

Here, the configuration described above may take on the configuration described hereinafter. That is, the alert indicates that the communication parameter provision service process is to be suspended. Alternatively, the alert is communicated to another communication apparatus or the user. Alternatively, the communication apparatus determines whether the additional information added to the transmitted notification signal has been deleted from the notification signal transmitted by another communication apparatus, or whether additional information that is different from the additional information added to the transmitted notification signal has been added to the notification signal transmitted by another communication apparatus.

Furthermore, in the above descriptions, the communication apparatus confirms that identification information of a device that is running a communication parameter provision service is included in a received signal, and acquires communication parameters from the device that is running the communication parameter provision service, based on the identification information included in the received signal. The communication apparatus then abandons the communication parameters acquired in the acquiring based on an alert message transmitted from the device that is running the communication parameter provision service.

Accordingly, the provision and reception of communication parameters can be carried out with efficiency, and the communication parameters can be easily set, even in ad-hoc mode, where there is no fixed access point.

In other words, the provision and reception of the communication parameters can be carried out with efficiency, and the communication parameters can be easily set, even if the beacon is not always transmitted by the same device, and even if the same device does not always respond to a search request.

According to the present invention, communication parameters can be set with ease.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A communication apparatus (101), comprising:
an acquisition unit (215) configured to acquire registrar information comprising authentication information and identification information of a provision apparatus (103), which provides communication parameters, included in a signal from the provision apparatus (103);
a determination unit (215) configured to determine whether or not to make a response to a search signal if receiving the search signal (S702); and
a transmission unit (215, 204, 205) configured to transmit a response signal (S808) to the search signal from another communication apparatus (102), to said other communication apparatus (102), and
wherein the transmission unit is configured to transmit the response signal to which the identification information of the provision apparatus (103) acquired by the acquisition unit is added while the provision apparatus (103) is running a communication parameter provision service,
the transmission unit is configured to transmit the response signal without adding the identification information while the provision apparatus (103) is not running the communication parameter provision service, and
the transmission unit is configured to transmit the response signal if the determination unit determines to make a response to the search signal.

2. The communication apparatus (101) according to claim 1, wherein the determination unit is configured to determine whether or not to make a response to the search signal in accordance with whether an apparatus which has transmitted a beacon signal immediately before said other communication apparatus (102) transmits the search signal, is the communication apparatus.

3. The communication apparatus (101) according to claim 1 or claim 2, wherein the response signal to which the identification information is added, includes information indicating that the provision apparatus (103) is running a communication parameter provision service for providing the communication parameters.

4. The communication apparatus (101) according to any one of claims 1 to 3, further comprising a notification unit (215, 204, 205) configured to transmit a notification signal to which the registrar information comprising authentication information and identification information of the provision apparatus (103) acquired by the acquisition unit is added.

5. The communication apparatus (101) according to any one of claims 1 to 4, wherein the acquisition unit and the transmission unit are configured to perform the processing if a communication mode in which communication apparatuses communicate directly with one another without utilizing a base station is set.

6. The communication apparatus (101) according to any one of claims 1 to 5, further comprising an image processing unit configured to process an image.

7. The communication apparatus (101) according to any one of claims 1 to 6, further comprising an image sensing unit configured to sense an image.

8. The communication apparatus (101) according to any one of claims 1 to 7, further comprising a display processing unit configured to process information for presenting information on a display unit.

9. The communication apparatus (101) according to any one of claims 1 to 8, further comprising an operation unit configured to operate the communication apparatus by a user.

10. The communication apparatus (101) according to any one of claims 1 to 9, further comprising an interface configured to connect a memory card.

11. The communication apparatus (101) according to any one of claims 1 to 10, further comprising an interface configured to connect an external device.

12. The communication apparatus (101) according to any one of claims 1 to 11, wherein the authentication information is information regarding authentication being performed using a push-button configuration method.

13. A communication method for a communication apparatus (101), comprising:
acquiring registrar information comprising authentication information and identification information of a provision apparatus (103), which provides communication parameters, included in a signal from the provision apparatus (S502, S503);
determining whether or not to make a response to a search signal if receiving the search signal (S702); and
if it is determined to make a response to the search signal:
transmitting a response signal to the search signal from another communication apparatus (102), to said other communication apparatus (102), the acquired identification information of the provision apparatus (103) being added to the response signal (S704) while the provision apparatus (103) is running a communication parameter provision service, and
transmitting a response signal (S808) to the search signal from said other communication apparatus (102), to said other communication apparatus (102), the acquired identification information of the provision apparatus (103) not being added to the response signal (S705) while the provision apparatus (103) is not running the communication parameter provision service.

14. A computer-readable storage medium storing a computer program that, when executed by a communication apparatus (101), causes the communication apparatus (101) to perform the steps of:
acquiring registrar information comprising authentication information and identification information of a provision apparatus (103), which provides communication parameters, included in a signal from the provision apparatus (S502, S503);
determining whether or not to make a response to a search signal if receiving the search signal (S702); and
if it is determined to make a response to the search signal:
transmitting a response signal (S808) to the search signal from another communication apparatus (102), to said other communication apparatus (102), the acquired identification information of the provision apparatus (103) being added to the response signal (S704) while the provision apparatus (103) is running a communication parameter provision service, and
transmitting a response signal (S808) to the search signal from said other communication apparatus (102), to said other communication apparatus (102), the acquired identification information of the provision apparatus (103) not being added to the response signal (S705) while the provision apparatus (103) is not running the communication parameter provision service.

## Patentansprüche

1. Kommunikationsvorrichtung (101), umfassend:
eine Erfassungseinheit (215), konfiguriert zum Erfassen von Registrarinformation samt Authentifizierungsinformation und Identifikationsinformation einer Kommunikationsparameter bereitstellenden Bereitstellungsvorrichtung (103), die in einem Signal von der Bereitstellungsvorrichtung (103) enthalten ist;
eine Bestimmungseinheit (215), konfiguriert, zu bestimmen, ob auf ein Suchsignal geantwortet werden soll oder nicht, falls das Suchsignal empfangen wird (S702); und
eine Übertragungseinheit (215, 204, 205), konfiguriert zum Übertragen, ansprechend auf das Suchsignal von einer anderen Kommunikationsvorrichtung (102), eines Antwortsignals (S808) an die andere Kommunikationsvorrichtung (102), und
wobei die Übertragungseinheit konfiguriert ist zum Übertragen des Antwortsignals, zu dem die Identifikationsinformation der durch die Erfassungseinheit erfassten Bereitstellungsvorrichtung (103) hinzugefügt wird, während die Bereitstellungsvorrichtung (103) einen Kommunikationsparameterbereitstellungsdienst ausführt,
die Übertragungseinheit konfiguriert ist zum Übertragen des Antwortsignals ohne Hinzufügen der Identifikationsinformation, während die Bereitstellungsvorrichtung (103) den Kommunikationsparameterbereitstellungsdienst nicht ausführt, und
die Übertragungseinheit konfiguriert ist zum Übertragen des Antwortsignals, falls die Bestimmungseinheit bestimmt, dass auf das Suchsignal geantwortet wird.

2. Kommunikationsvorrichtung (101) nach Anspruch 1, wobei die Bestimmungseinheit konfiguriert ist, zu bestimmen, ob auf das Suchsignal geantwortet werden soll oder nicht, abhängig davon, ob eine Vorrichtung, die ein Beaconsignal unmittelbar vor Übertragung des Suchsignals von der anderen Kommunikationsvorrichtung (102) übertragen hat, die Kommunikationsvorrichtung ist.

3. Kommunikationsvorrichtung (101) nach Anspruch 1 oder 2, wobei das Antwortsignal, zu dem die Identifikationsinformation hinzugefügt wird, Information einschließt, die angibt, dass die Bereitstellungsvorrichtung (103) einen Kommunikationsparameterbereitstellungsdienst zum Bereitstellen der Kommunikationsparameter ausführt.

4. Kommunikationsvorrichtung (101) nach einem der Ansprüche 1 bis 3, ferner umfassend eine Benachrichtigungseinheit (215, 204, 205), konfiguriert zum Übertragen eines Benachrichtigungssignals, zu dem die durch die Erfassungseinheit erfasste Registrarinformation samt Authentifizierungsinformation und Identifikationsinformation der Bereitstellungsvorrichtung hinzugefügt wird.

5. Kommunikationsvorrichtung (101) nach einem der Ansprüche 1 bis 4, wobei die Erfassungseinheit und die Übertragungseinheit konfiguriert sind zum Durchführen der Verarbeitung, falls ein Kommunikationsmodus eingestellt ist, in dem Kommunikationsvorrichtungen direkt ohne Verwendung einer Basisstation miteinander kommunizieren.

6. Kommunikationsvorrichtung (101) nach einem der Ansprüche 1 bis 5, ferner umfassend eine zum Verarbeiten eines Bilds konfigurierte Bildverarbeitungseinheit.

7. Kommunikationsvorrichtung (101) nach einem der Ansprüche 1 bis 6, ferner umfassend eine zum Aufnehmen eines Bilds konfigurierte Bildaufnahmeeinheit.

8. Kommunikationsvorrichtung (101) nach einem der Ansprüche 1 bis 7, ferner umfassend eine zum Verarbeiten von Information zum Darstellen von Information auf einer Anzeigeeinheit konfigurierte Anzeigeverarbeitungseinheit.

9. Kommunikationsvorrichtung (101) nach einem der Ansprüche 1 bis 8, ferner umfassend eine zum Bedienen der Kommunikationsvorrichtung durch einen Benutzer konfigurierte Bedienungseinheit.

10. Kommunikationsvorrichtung (101) nach einem der Ansprüche 1 bis 9, ferner umfassend eine zum Verbinden mit einer Speicherkarte konfigurierte Schnittstelle.

11. Kommunikationsvorrichtung (101) nach einem der Ansprüche 1 bis 10, ferner umfassend eine zum Verbinden mit einem externen Device konfigurierte Schnittstelle.

12. Kommunikationsvorrichtung (101) nach einem der Ansprüche 1 bis 11, wobei die Authentifizierungsinformation Information bezüglich einer unter Verwendung eines Push-Button-Konfigurierungsverfahrens durchgeführten Authentifizierung ist.

13. Kommunikationsverfahren für eine Kommunikationsvorrichtung (101), umfassend:
Erfassen von Registrarinformation samt Authentifizierungsinformation und Identifikationsinformation einer Kommunikationsparameter bereitstellenden Bereitstellungsvorrichtung (103), die in einem Signal von der Bereitstellungsvorrichtung enthalten ist (S502, S503);
Bestimmen, ob auf ein Suchsignal geantwortet werden soll oder nicht, falls das Suchsignal empfangen wird (S702);
falls bestimmt wird, dass auf das Suchsignal geantwortet werden soll:
Übertragen eines Antwortsignals an die andere Kommunikationsvorrichtung (102) ansprechend auf das Suchsignal von einer anderen Kommunikationsvorrichtung (102), wobei die erfasste Identifikationsinformation der Bereitstellungsvorrichtung (103) zum Antwortsignal hinzugefügt wird (S704), während die Bereitstellungsvorrichtung (103) einen Kommunikationsparameterbereitstellungsdienst ausführt, und
Übertragen eines Antwortsignals (S808) an die andere Kommunikationsvorrichtung (102) ansprechend auf das Suchsignal von der anderen Kommunikationsvorrichtung (102), wobei die erfasste Identifikationsinformation der Bereitstellungsvorrichtung (103) nicht zum Antwortsignal hinzugefügt wird (S705), während die Bereitstellungsvorrichtung (103) den Kommunikationsparameterbereitstellungsdienst nicht ausführt.

14. Computerlesbares Speichermedium mit gespeichertem Computerprogramm, das beim Ausführen durch eine Kommunikationsvorrichtung (101) diese veranlasst, die folgenden Schritte durchzuführen:
Erfassen von Registrarinformation samt Authentifizierungsinformation und Identifikationsinformation einer Kommunikationsparameter bereitstellenden Bereitstellungsvorrichtung (103), die in einem Signal von der Bereitstellungsvorrichtung enthalten ist (S502, S503);
Bestimmen, ob auf ein Suchsignal geantwortet werden soll oder nicht, falls das Suchsignal empfangen wird (S702); und
falls bestimmt wird, dass auf das Suchsignal geantwortet werden soll:
Übertragen eines Antwortsignals (S808) an die andere Kommunikationsvorrichtung (102) ansprechend auf das Suchsignal von einer anderen Kommunikationsvorrichtung (102), wobei die erfasste Identifikationsinformation der Bereitstellungsvorrichtung (103) zum Antwortsignal hinzugefügt wird (S704), während die Bereitstellungsvorrichtung (103) einen Kommunikationsparameterbereitstellungsdienst ausführt, und
Übertragen eines Antwortsignals (S808) an die andere Kommunikationsvorrichtung (102) ansprechend auf das Suchsignal von der anderen Kommunikationsvorrichtung (102), wobei die erfasste Identifikationsinformation der Bereitstellungsvorrichtung (103) nicht zum Antwortsignal hinzugefügt wird (S705), während die Bereitstellungsvorrichtung (103) den Kommunikationsparameterbereitstellungsdienst nicht ausführt.

## Revendications

1. Appareil de communication (101) comprenant :
une unité d'acquisition (215) configurée pour acquérir des informations d'enregistrement comprenant des informations d'authentification et des informations d'identification d'un appareil de configuration (103), qui fournit des paramètres de communication, qui sont incluses dans un signal émanant de l'appareil de configuration (103) ;
une unité de détermination (215) configurée pour déterminer s'il faut ou non fournir une réponse à un signal de recherche lorsque le signal de recherche est reçu (S702) ; et
une unité d'émission (215, 204, 205) configurée pour émettre un signal de réponse (S808) au signal de recherche provenant d'un autre appareil de communication (102), vers ledit autre appareil de communication (102) ; et
dans lequel l'unité d'émission est configurée pour émettre le signal de réponse auquel sont ajoutées les informations d'identification de l'appareil de configuration (103) obtenues par l'unité d'acquisition, lorsque l'appareil de configuration (103) exécute un service de configuration de paramètres de communication ;
l'unité d'émission est configurée pour émettre le signal de réponse sans y ajouter les informations d'identification lorsque l'appareil de configuration (103) n'exécute pas le service de configuration de paramètres de communication ; et
l'unité d'émission est configurée pour émettre le signal de réponse si l'unité de détermination détermine de fournir une réponse au signal de recherche.

2. Appareil de communication (101) selon la revendication 1, dans lequel l'unité de détermination est configurée pour déterminer de fournir ou non une réponse au signal de recherche si un appareil qui a émis un signal de balise, immédiatement avant que ledit autre appareil de communication (102) n'émette le signal de recherche, est l'appareil de communication.

3. Appareil de communication (101) selon la revendication 1 ou la revendication 2, dans lequel le signal de réponse auquel sont ajoutées les informations d'identification comprend des informations indiquant que l'appareil de configuration (103) exécute un service de configuration de paramètres de communication afin de configurer les paramètres de communication.

4. Appareil de communication (101) selon l'une quelconque des revendications 1 à 3, comprenant en outre une unité de notification (215, 204, 205) configurée pour émettre un signal de notification auquel sont ajoutées les informations d'enregistrement comprenant des informations d'authentification et des informations d'identification de l'appareil de configuration (103), obtenues par l'unité d'acquisition.

5. Appareil de communication (101) selon l'une quelconque des revendications 1 à 4, dans lequel l'unité d'acquisition et l'unité d'émission sont configurées pour effectuer le traitement si un mode de communication, dans lequel les appareils de communication communiquent directement l'un avec l'autre sans utiliser une station de base, a été armé.

6. Appareil de communication (101) selon l'une quelconque des revendications 1 à 5, comprenant en outre une unité de traitement d'images configurée pour traiter une image.

7. Appareil de communication (101) selon l'une quelconque des revendications 1 à 6, comprenant en outre une unité de capture d'images configurée pour capturer une image.

8. Appareil de communication (101) selon l'une quelconque des revendications 1 à 7, comprenant en outre une unité de traitement d'affichage configurée pour traiter des informations afin de présenter des informations sur une unité d'affichage.

9. Appareil de communication (101) selon l'une quelconque des revendications 1 à 8, comprenant en outre une unité d'exploitation configurée pour permettre à l'utilisateur de faire fonctionner l'appareil de communication.

10. Appareil de communication (101) selon l'une quelconque des revendications 1 à 9, comprenant en outre une interface configurée pour connecter une carte de mémoire.

11. Appareil de communication (101) selon l'une quelconque des revendications 1 à 10, comprenant en outre une interface configurée pour connecter un dispositif externe.

12. Appareil de communication (101) selon l'une quelconque des revendications 1 à 11, dans lequel les informations d'authentification sont des informations qui intéressent une authentification effectuée à l'aide d'un procédé de configuration à bouton poussoir.

13. Procédé de communication pour un appareil de communication (101), comprenant les étapes consistant à :
acquérir des informations d'enregistrement comprenant des informations d'authentification et des informations d'identification d'un appareil de configuration (103), qui fournit des paramètres de communication, qui sont incluses dans un signal émanant de l'appareil de configuration (S502, S503) ;
déterminer s'il faut ou non fournir une réponse à un signal de recherche lorsque le signal de recherche est reçu (S702) ; et
s'il est déterminé qu'une réponse doit être donnée au signal de recherche :
émettre un signal de réponse au signal de recherche provenant d'un autre appareil de communication (102), à destination dudit autre appareil de communication (102), les informations d'identification de l'appareil de configuration (103) obtenues étant ajoutées au signal de réponse (S704) lorsque l'appareil de configuration (103) exécute un service de configuration de paramètres de communication ; et
émettre un signal de réponse (S808) au signal de recherche provenant dudit autre appareil de communication (102), à destination dudit autre appareil de communication (102), les informations d'identification de l'appareil de configuration (103) n'étant pas ajoutées au signal de réponse (S705) lorsque l'appareil de configuration (103) n'exécute pas le service de configuration de paramètres de communication.

14. Support de stockage lisible par ordinateur, portant un programme d'ordinateur qui, lorsqu'il est exécuté par un appareil de communication (101), commande à l'appareil de communication (101) d'exécuter les étapes consistant à :
acquérir des informations d'enregistrement comprenant des informations d'authentification et des informations d'identification d'un appareil de configuration (103), qui fournit des paramètres de communication, qui sont incluses dans un signal émanant de l'appareil de configuration (S502, S503) ;
déterminer s'il faut ou non fournir une réponse à un signal de recherche lorsque le signal de recherche est reçu (S702) ; et
s'il est déterminé qu'une réponse doit être donnée au signal de recherche :
émettre un signal de réponse au signal (S808) de recherche provenant d'un autre appareil de communication (102), à destination dudit autre appareil de communication (102), les informations d'identification de l'appareil de configuration (103) obtenues étant ajoutées au signal de réponse (S704) lorsque l'appareil de configuration (103) exécute un service de configuration de paramètres de communication ; et
émettre un signal de réponse (S808) au signal de recherche provenant dudit autre appareil de communication (102), à destination dudit autre appareil de communication (102), les informations d'identification de l'appareil de configuration (103) n'étant pas ajoutées au signal de réponse (S705) lorsque l'appareil de configuration (103) n'exécute pas le service de configuration de paramètres de communication.
